# EUROPEAN PATENT APPLICATION

(11) **EP 4 693 596 A1**
(43) Date of publication of application: **11.02.2026**
(21) Application number: 24877447.3
(22) Date of filing: 30.09.2024
(51) Int. Cl.: H01M 10/42, H01M 50/24, A62C 35/10, H01M 50/209, H01M 50/211, H01M 50/249, A62C 3/16

(54) **BATTERY MODULE, AND BATTERY PACK AND VEHICLE INCLUDING SAME**

(30) Priority: 13.10.2023 KR 20230136821
(71) Applicant: LG Energy Solution, Ltd., Seoul 07335 (KR)
(72) Inventor: CHUNG, Won-Sik, Daejeon 34122 (KR)
(74) Representative: Plasseraud IP
(86) International application number: PCT/KR2024/014886
(87) International publication number: WO 2025/079909

(57) **Abstract**

The present disclosure relates to a battery module including: a plurality of battery cells; and a compression member disposed between the plurality of battery cells, filled with a fluid so that the fluid moves therein, and configured to be partially deformed in shape by external pressure.

## Description

### TECHNICAL FIELD

The present disclosure relates to a battery module, and a battery pack and a vehicle including the same.

This application is based on and claims priority from Korean Patent Application No. 10-2023-0136821, filed on October 13, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack. Alternatively, recently, a battery pack has been manufactured by a cell-to-pack type in which multiple battery cells are directly stored in a pack housing or the like, instead of being modularized.

Meanwhile, since a pouch-type battery cell is manufactured by laminating electrodes and separators, repeated charge/discharge cycles may cause a sliding phenomenon in which the laminated electrodes and separators slide relative to each other at the edge of the battery cell. This reduces the thickness of the edge of the battery cell, so that the thickness between the battery cells inside the battery cell stack became uneven. This uneven thickness may lead to a problem with local deterioration of the battery cell during the charge/discharge cycle of the battery cell.

In order to prevent swelling of the battery cell that occurs during the charge/discharge cycle of the pouch-type battery cell in existing battery modules, compression members such as double-sided tape and PU pads are applied between the battery cells to pressurize the battery cells.

However, although the compression member may pressurize the battery cells to prevent swelling, it is difficult to uniformize the thickness deviation of the battery cells by applying different pressures to local positions.

Therefore, there is a need to develop a structure capable of uniformly pressurizing the battery cells to minimize the thickness deviation of the battery cells, thereby extending the expected lifespan of the battery cells.

In addition, since the compression member is manufactured through plastic foam molding, when a fire occurs in the battery module, the flame is likely to rapidly spread to the compression member, leading to thermal propagation to other battery cells. If this thermal propagation fails to be controlled between the battery cells, it may cause a fire or explosion of the entire battery module or battery pack, which is very dangerous.

Therefore, there is a need to develop a structure capable of suppressing high-temperature gases or flames generated in the battery cell when a thermal event occurs in any battery cell, thereby delaying thermal runaway between the battery cells.

### DISCLOSURE

### Technical Problem

The present disclosure is designed to solve the problems of the related art, and therefore the present disclosure is directed to providing a battery module capable of minimizing the thickness deviation of battery cells, thereby extending the lifespan of the battery cell, and a battery pack and a vehicle including the same.

In addition, the present disclosure is also to provide a battery module with improved safety and reliability by appropriately controlling high-temperature gases or flames generated from the battery cells in an abnormal situation of the battery cells, thereby effectively preventing thermal propagation between the battery cells or battery modules, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; and a compression member disposed between the plurality of battery cells, filled with a fluid so that the fluid moves therein, and configured to be partially deformed in shape by external pressure.

The compression member may include a protruding portion in which at least a portion protrudes outward to form a path through which the fluid moves.

The protruding portion may be configured to be in contact with the battery cells provided on both sides of the compression member.

The protruding portion may be formed on an edge of the compression member.

The protruding portion may include a first protruding portion provided on a longitudinal end side of the compression member.

The first protruding portion may be configured to extend in a height direction of the compression member.

The protruding portion may further include a second protruding portion configured to extend orthogonally to the first protruding portion.

A width of the first protruding portion may be configured to be greater than a width of the second protruding portion.

The protruding portion may further include a third protruding portion provided at a center of the compression member.

The fluid may include a fluid having non-Newtonian characteristics.

The fluid may be configured as a colloidal solution.

The compression member may be configured so that the fluid therein flows out of the compression member by heat or pressure.

The fluid may be configured to include at least one of magnesium hydroxide and aluminum hydroxide.

In addition, the present disclosure also provides a battery pack including a battery module according to the present disclosure.

In addition, the present disclosure also provides a vehicle including a battery module according to the present disclosure.

### Advantageous Effects

According to one aspect of the present disclosure, the compression member may uniformly pressurize the battery cells to minimize the thickness deviation of the battery cells, thereby extending the expected lifespan of the battery cells. In particular, according to this aspect of the present disclosure, the performance of the battery cell may be maximized.

In addition, according to another aspect of the present disclosure, when a thermal event occurs in a specific battery cell, a fluid inside the compression member may flow out of the compression member, thereby extinguishing the flame occurring in the specific battery cell early. In particular, according to this aspect of the present disclosure, the propagation of thermal runaway is able to be effectively prevented or delayed in the battery module, thereby ensuring the safety and reliability of the battery module.

Therefore, it is possible to prevent or delay events due to thermal runaway in the battery pack including a plurality of battery modules or a device equipped with them, such as fire or explosion.

In particular, in the case of an electric vehicle, by suppressing or delaying the propagation of thermal runaway between the battery cells or battery modules, it is possible to secure sufficient time for the occupants to escape or drive.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be, for example, a cross-section taken along line I-I' in FIG. 1.
FIG. 4 is a cross-sectional view of a part of a battery module when viewed from above according to an embodiment of the present disclosure, which may be, for example, a cross-section taken along line II-II' in FIG. 1.
FIG. 5 is a front view of a partial configuration of a battery module to which a compression member is applied according to an embodiment of the present disclosure.
FIG. 6 is a cross-sectional view of a part of a battery module to which a compression member is applied according to an embodiment of the present disclosure.
FIG. 7 is a front view of a partial configuration of a battery module to which a compression member is applied according to another embodiment of the present disclosure.
FIG. 8 is a cross-sectional view of a part of a battery module to which a compression member is applied according to another embodiment of the present disclosure.
FIG. 9 is a front view of a partial configuration of a battery module to which a compression member is applied according to another embodiment of the present disclosure.
FIG. 10 is a cross-sectional view of a part of a battery module according to an embodiment of the present disclosure, which illustrates that a flame occurring in a battery cell is suppressed by a fluid inside a compression member.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of the same or similar elements between the embodiments will be omitted, and the present disclosure will be described based on differences therebetween.

Meanwhile, although terms indicating directions such as up, down, left, right, front, and back directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left-right direction, the Y-axis direction may indicate the front-back direction perpendicular to the X-axis direction on the horizontal plane (X-Y plane), and the Z-axis direction may indicate the up-down direction (vertical direction) perpendicular to both the X-axis direction and the Y-axis direction.

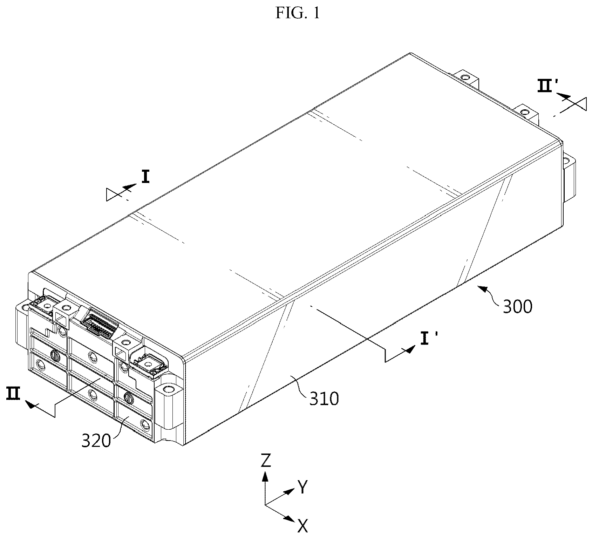

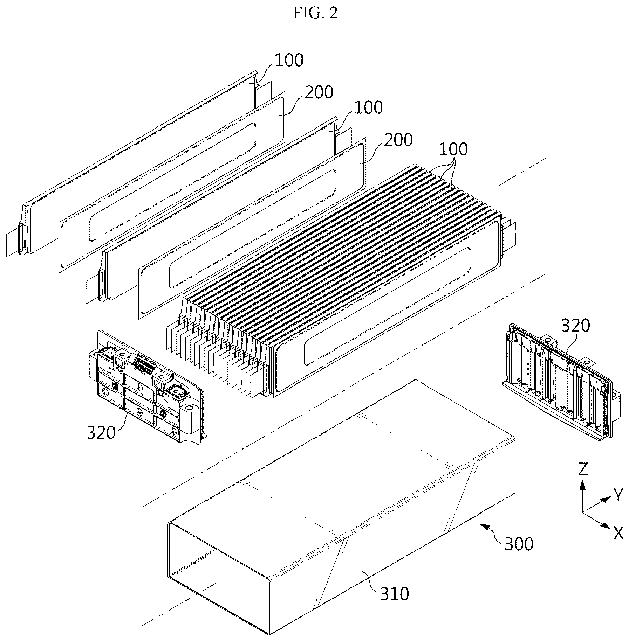

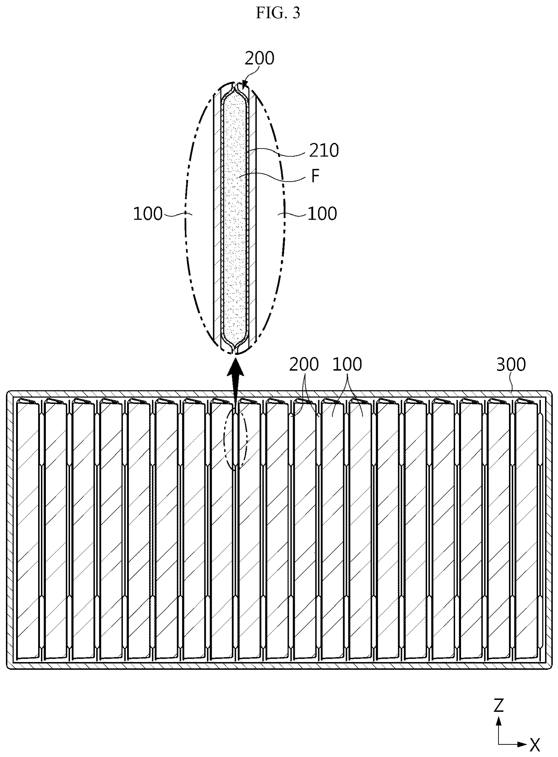

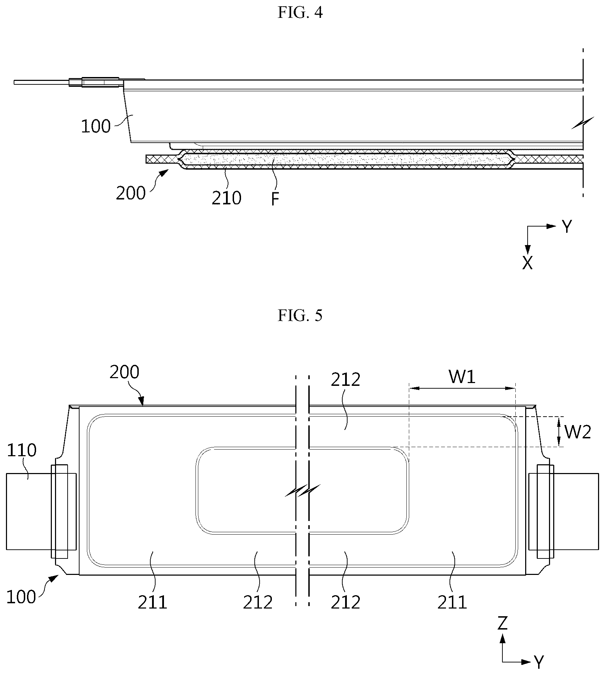

FIG. 1 is a perspective view of a battery module according to an embodiment of the present disclosure. FIG. 2 is an exploded perspective view of a battery module according to an embodiment of the present disclosure. FIG. 3 is a cross-sectional view of a battery module according to an embodiment of the present disclosure, which may be, for example, a cross-section taken along line I-I' in FIG. 1. In addition, FIG. 4 is a cross-sectional view of a part of a battery module when viewed from above according to an embodiment of the present disclosure, which may be, for example, a cross-section taken along line II-II' in FIG. 1.

Referring to FIGS. 1 to 4, a battery module 10 according to an embodiment of the present disclosure includes a battery cell 100 and a compression member 200.

Referring to FIGS. 2 and 3, a plurality of battery cells 100 may be included. The battery cell 100 may have an electrode assembly (including a positive electrode plate, a negative electrode plate, and a separator), an electrolyte, and a battery case. The plurality of battery cells 100 may be electrically connected to each other. For example, the plurality of battery cells 100 may be electrically connected to each other in series and/or in parallel through a bus-bar or the like.

The plurality of battery cells 100 may be stacked on each other and included in the battery module 10. For example, as shown in FIG. 2 or the like, the plurality of battery cells 100 may be arranged side by side in the left-right direction (X-axis direction) while standing in the vertical direction (Z-axis direction). In this case, each battery cell 100 may have a sealing portion directed in the front-back direction (Y-axis direction) and the up-down direction (Z-axis direction), and a storage portion directed in the left-right direction (X-axis direction).

Meanwhile, the present disclosure is not limited to a specific type or shape of battery cell 100, and various battery cells 100 known at the time of filing the present disclosure may be applied to configure the battery module 10 of the present disclosure. In the present embodiment, although a pouch-type secondary battery with high energy density and easy stacking will be described as shown in the drawings, a prismatic secondary battery may also be applied to the battery cell 100 of the present disclosure.

The compression member 200 may be provided between at least some of the plurality of battery cells 100. That is, the compression member 200 may be configured to be interposed between two adjacent battery cells 100. Furthermore, as shown in FIGS. 2 and 3, multiple compression members 200 may be included in one battery module 10. In this case, the multiple compression members 200 may be arranged to be spaced a predetermined distance apart from each other in the stacking direction of the battery cell 100 (X-axis direction in the drawing). In addition, one or more battery cells 100 may be interposed between two adjacent compression members 200.

When the battery module 10 is viewed vertically with respect to the stacking direction of the battery cell 100, the cross-sectional area of the compression member 200 may be configured to be almost the same as the cross-sectional area of the battery cell 100. That is, the compression member 200 may be configured to cover almost all of the battery cell 100.

The compression member 200 may be filled with a fluid F. That is, the compression member 200 may have a space to be filled with the fluid F, and the fluid F may be configured to be movable inside the space. That is, a path through which the fluid F moves may be formed inside the compression member 200.

The fluid F may be configured to move only when an external force is applied to the compression member 200. Accordingly, the compression member 200 may be configured to be partially deformed in shape by the external pressure. More specifically, the fluid F may move inside the compression member 200 by the pressure applied from the battery cell 100, so that the shape of the compression member 200 may be deformed to correspond to the deformed shape of the battery cell 100. In particular, the compression member 200 may be configured to be partially deformed in thickness in a portion where an uneven reduction in thickness occurs in the battery cell 100. The fluid F located at the position where the thickness deviation of the battery cell 100 is relatively uniform may move to the position where the thickness deviation of the battery cell 100 is uneven due to the thickness reduction. Accordingly, the compression member 200 may uniformly pressurize the adjacent battery cells 100.

That is, according to the above embodiment of the present disclosure, the compression member 200 may be configured so that the fluid F moves therein to compensate for the thickness deviation of the battery cells 100. Therefore, according to the above-implemented configuration, local deterioration of the battery cell 100 may be prevented during the charge/discharge cycle, thereby extending the expected lifespan of the battery cell 100 and maximizing the performance of the battery cell 100. In addition, according to the above-implemented configuration of the present disclosure, even when the battery cell 100 is swollen, the compression member 200 may compress the battery cell 100, thereby contributing to the structural rigidity of the battery cells 100.

In addition, the compression member 200 may perform, when the battery module 10 is ignited internally, a thermal barrier function of blocking heat such as flames generated from the ignited battery cell 100 from spreading in the stacking direction of the battery cells 100. Accordingly, thermal propagation to neighboring battery cells 100 may be minimized. The compression member 200 may block high-temperature gases, flames, discharges, and the like generated from the battery cell 100, as well as heat. Therefore, the compression member 200 may partition or separate the battery cells 100 to prevent flames or the like from spreading between the battery cells 100.

Meanwhile, referring to FIGS. 1 to 3, the battery module 10 according to an embodiment of the present disclosure may further include a module case 300. The module case 300 may be configured to have an inner space to accommodate the battery cells 100. The module case 300 of the present embodiment may include a case body 310 and end plates 320 disposed on the front and rear sides of the case body 310.

Here, the case body 310 may have an upper plate, a lower plate, a left plate, and a right plate to form a storage space, and a stack of battery cells 100 may be stored in this storage space. The case body 310 may be made of a metal material having rigidity and heat resistance to physically or chemically protect the accommodated battery cells 100.

In addition, the end plate 320 may be configured to be coupled to the case body 310 so as to cover an opening of the case body 310. More specifically, the case body 310 may be configured to have a front opening and a rear opening, and the end plates 320 may be configured to be coupled to the front and rear openings of the case body 310.

Meanwhile, although not shown in the drawing, a venting hole may be provided on the case body 310, enabling directional venting in one direction. For example, a plurality of venting holes may be formed on the upper surface of the case body, enabling directional venting toward the top of the battery module 10 through the venting holes.

The compression member 200 will be described in more detail with reference to FIG. 4. The compression member 200 may include a protruding portion 210. The protruding portion 210 may be formed by at least a portion of the compression member 200 protruding outward. The protruding portion 210 may be formed to protrude in at least one of the left and right directions of the compression member 200. A path through which the fluid F moves may be formed inside the protruding portion 210. That is, the path through which the fluid F moves may be formed to protrude outward from the compression member 200.

The protruding portions 210 may be configured to be in contact with the battery cells 100 provided on both sides of the compression member 200. The protruding portion 210 may be configured to pressurize a portion of the battery cell 100. As a result, an external force may be applied to the protruding portion 210 in contact with a thicker portion of the battery cell 100. Accordingly, the fluid F inside the protruding portion 210 may move from the side in contact with the thicker portion of the battery cell 100 to the side in contact with a portion where a thickness reduction occurs in the battery cell 100. According to the above-implemented configuration of the present disclosure, the compression member 200 may compensate for a thickness reduction of the battery cell 100 to make the thickness deviation of the battery cell 100 uniform.

Meanwhile, the compression member 200 may include a fluid F and an exterior material that forms the outer surface of the compression member 200 and accommodates the fluid F. The exterior material may be configured in a pouch type so that the inside thereof is filled with the fluid F. In this case, at least a portion of the exterior material may protrude to form the protruding portion 210, and the fluid F may be accommodated inside the protruding portion 210. The remaining portion excluding the protruding portion 210 may be defined as a bonding portion. The bonding portion may serve to prevent the fluid F inside the protruding portion 210 from flowing out. The bonding portion may be formed by folding one sheet of exterior material and applying heat to the overlapping portions thereof. Alternatively, the bonding portion may be formed by overlapping two sheets of exterior materials and then applying heat.

The exterior material may be configured as multiple layers. The innermost layer of the exterior material may be formed of PP (polypropylene). Thus, the bonding portion may be sealed by applying heat. In addition, the outermost layer of the exterior material may be formed of PET (polyethylene terephthalate). As a result, insulation from the battery cell 100 may be secured. In addition, the exterior material may include a metal layer such as aluminum between the innermost layer and the outermost layer. Thus, the rigidity of the compression member 200 may be secured. In addition, the exterior material may include a layer of nylon between the innermost layer and the outermost layer.

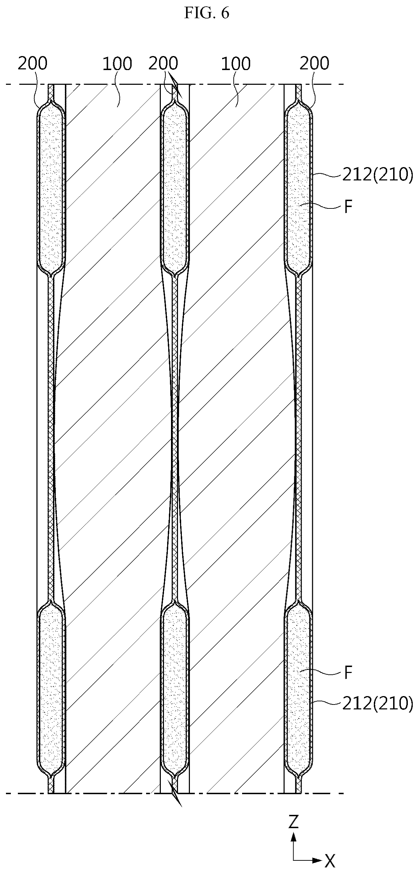

FIG. 5 is a front view of a partial configuration of a battery module to which a compression member is applied according to an embodiment of the present disclosure, and FIG. 6 is a cross-sectional view of a part of a battery module to which a compression member is applied according to an embodiment of the present disclosure.

The protruding portion 210 may be formed to correspond to a position where a thickness reduction occurs in the battery cell 100. The thickness reduction of the battery cell 100 caused by sliding of the electrodes and the separator may typically occur at the edge of the battery cell 100. Accordingly, the protruding portion 210 may be formed at the edge of the compression member 200. Here, the edge of the compression member 200 may indicate the sides along the perimeter of the compression member 200.

Meanwhile, referring to FIG. 5, each of the plurality of battery cells 100 may have an electrode terminal 110. The electrode terminal 110 may be connected to the electrode assembly and configured to extend to the outside of the battery case.

A pair of electrode terminals 110 may be provided, and the pair of electrode terminals 110 may extend to both ends of the battery cell 100, that is, in the longitudinal direction (±Y-axis direction). In this case, the pair of electrode terminals 110 may be a positive electrode lead and a negative electrode lead. If necessary, the battery cell 100 may be configured so that two electrode terminals 110 are located only at one end in the Y-axis direction, for example, at the end in the +Y-axis direction.

In this case, the protruding portion 210 may be provided on the side where the electrode terminals 110 are located. According to the above-implemented configuration of the present disclosure, it is possible to effectively prevent the phenomenon in which the electrodes and separators inside the electrode assembly slide relative to each other on the side where the electrode terminals 110 are located. As described above, a thickness reduction of the battery cell 100 may be compensated for on the side where the electrode terminals 110 are located, thereby effectively preventing the thickness unevenness of the battery cells 100.

Specifically, the protruding portion 210 may include a first protruding portion 211 provided on the end side of the compression member 200 in the longitudinal direction thereof. Here, the longitudinal direction may indicate the lengthwise direction (the ±Y-axis direction in the drawing) of the compression member 200. A plurality of first protruding portions 211 may be provided so as to be spaced apart from each other in the longitudinal direction. For example, as in the embodiment shown in FIG. 5, two first protruding portions 211 may be provided on both longitudinal end sides.

In addition, the first protruding portion 211 may be configured to extend in the height direction of the compression member 200. That is, the first protruding portion 211 may be configured to extend in a transversal direction (height direction or Z-axis direction) orthogonal to the longitudinal direction. According to the above-implemented configuration of the present disclosure, the thickness reduction of the battery cell 100 may be compensated for in the height direction. Specifically, a path through which the fluid F moves in the transversal direction may be provided inside the first protruding portion 211.

The protruding portion 210 may further include a second protruding portion 212. The second protruding portion 212 may be configured to extend orthogonally to the first protruding portion 211. That is, the second protruding portion 212 may be provided on the transversal end side of the compression member 200. The second protruding portion 212 may be configured to extend in the longitudinal direction of the compression member 200.

According to the above-implemented configuration of the present disclosure, a thickness reduction occurring at both transversal ends of the battery cell 100 may also be compensated for in the longitudinal direction. In addition, if the thickness reduction deviation of the battery cell 100 is large at both longitudinal ends, a path may be provided for the fluid F inside the first protruding portion 211 to flow in the longitudinal direction. As a result, according to the above-implemented configuration of the present disclosure, the balance of the fluid F inside the first protruding portions 211 provided at both longitudinal ends may be secured, thereby uniformly pressurizing the battery cell 100 from both sides.

A plurality of second protruding portions 212 may be provided to be spaced apart from each other in the transversal direction. For example, two second protruding portions 212 may be provided on both end sides in the transversal direction. That is, as shown in FIG. 5, two first protruding portion 211 and two second protruding portion 212 may be provided so as to be connected to each other. Accordingly, the fluid F may freely move between the first protruding portion 211 and the second protruding portion 212. According to the above-implemented configuration of the present disclosure, since the protruding portions 210 are provided on all four edges, the fluid F may move along the perimeter of the compression member 200.

According to an embodiment of the present disclosure, as shown in FIG. 5, the protruding portion 210 may be provided in the shape of a square ring with an empty central portion. When swelling occurs in the battery cell 100 during the charge/discharge cycle, the center of the battery cell 100 may usually swell outward more than the edge. According to the above-implemented configuration of the present disclosure, since the center of the protruding portion 210 is empty, when swelling occurs in the battery cell 100, the center of the battery cell 100 may provide a space capable of expanding.

Meanwhile, referring to FIG. 5, the width W1 of the first protruding portion 211 may be configured to be greater than the width W2 of the second protruding portion 212. That is, the area where the first protruding portion 211 is in contact with the battery cell 100 may be configured to be greater than the area where the second protruding portion 212 is in contact with the battery cell 100. In this case, a path for flow in the longitudinal direction may also be provided inside the first protruding portion 211. As a result, the area where the first protruding portion 211 is able to pressurize both the longitudinal ends of the battery cell 100, in particular, the electrode terminal 110 side, may be increased. Therefore, the first protruding portion 211 may pressurize both the longitudinal ends of the battery cell 100 more evenly, thereby minimizing the thickness deviation of the battery cells 100.

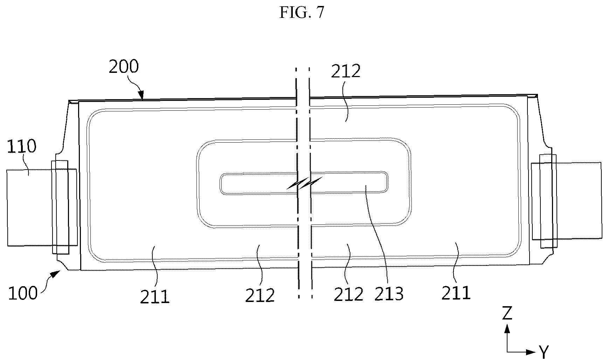

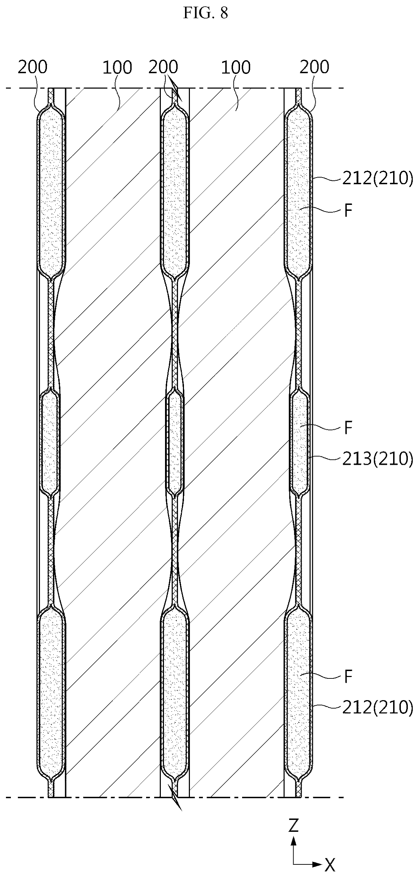

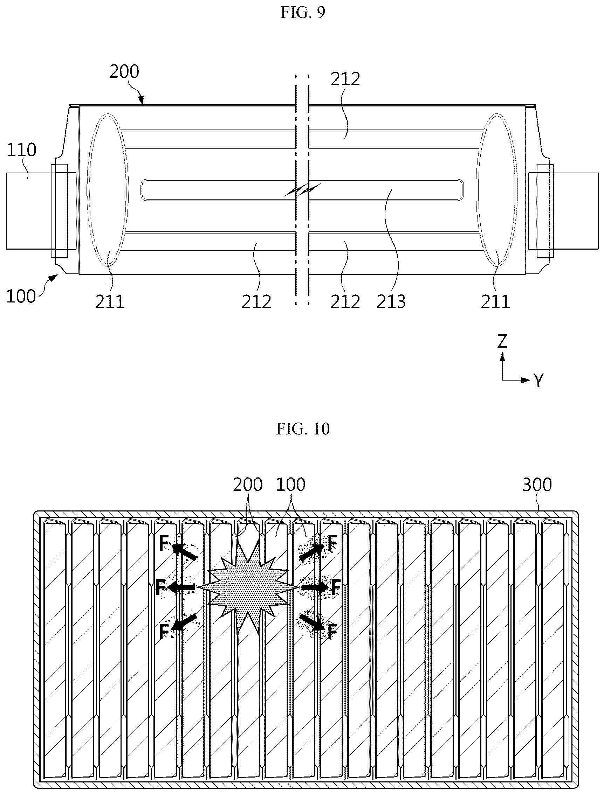

FIG. 7 is a front view of a partial configuration of a battery module to which a compression member is applied according to another embodiment of the present disclosure, and FIG. 8 is a cross-sectional view of a part of a battery module to which a compression member is applied according to another embodiment of the present disclosure. In addition, FIG. 9 is a front view of a partial configuration of a battery module to which a compression member is applied according to another embodiment of the present disclosure.

According to another embodiment of the present disclosure, the protruding portion 210 may further include a third protruding portion 213. The third protruding portion 213 may be provided at the center of the compression member 200. For example, as in the embodiment shown in FIG. 7, the third protruding portion 213 may be provided between two first protruding portions 211. In addition, the third protruding portion 213 may be provided between two second protruding portions 212.

In addition, referring to FIG. 8, the third protruding portion 213 may be configured to protrude less than the length by which the first protruding portion 211 and/or the second protruding portion 212 protrudes outward from the compression member 200. According to the above-implemented configuration of the present disclosure, when swelling occurs in the battery cell 100, the increased thickness of the center of the battery cell 100 may be absorbed. As a result, the center of the battery cell 100 may be prevented from swelling excessively.

Referring to FIG. 7 and FIG. 9, the extension direction of the third protruding portion 213 may be configured to be the same as the extension direction of the second protruding portion 212. That is, the third protruding portion 213 may be configured to extend in the longitudinal direction. In other words, the third protruding portion 213 may be configured in the shape of a rectangle extending long. In this case, the third protruding portion 213 may be configured to be shorter than the second protruding portion 212.

According to the above-implemented configuration of the present disclosure, since the third protruding portion 213 is configured to extend in the lengthwise direction of the battery cell 100, swelling of the center of the battery cell 100 may be more effectively absorbed.

Meanwhile, according to another embodiment of the present disclosure, as in the embodiment shown in FIG. 9, the first protruding portion 211 may be configured so that its width gradually increases toward the center. According to the above-implemented configuration of the present disclosure, a thickness reduction at the center of the battery cell 100 may be more effectively compensated for.

FIG. 10 is a cross-sectional view of a part of a battery module according to an embodiment of the present disclosure, which illustrates that a flame occurring in a battery cell is suppressed by a fluid inside a compression member.

According to an embodiment of the present disclosure, the fluid F inside the compression member 200 may include a fluid having non-Newtonian characteristics.

For example, the fluid F may be configured as a colloidal solution. That is, the fluid F may have thixotropy properties. Thixotropy indicates a phenomenon in which the viscosity of a polymer material solution changes due to an external force. Specifically, the viscosity of a thixotropic fluid is reduced when an external force is applied, and increases when no external force is applied. Accordingly, the fluid F configured as a colloidal solution or the like may switch from a gel state to a sol state when an external force is applied, thereby moving inside the compression member.

Meanwhile, the compression member 200 may be configured so that the fluid F therein may flow out of the compression member 200 by heat or pressure. For example, a portion of the exterior material may melt, so that the fluid F may flow out through the bonding portion. In the event of a flame occurring inside the battery module 10, the fluid F may be exposed to the outside of the compression member 200 to suppress the flame.

To this end, the fluid F may be configured to include at least one of magnesium hydroxide (Mg(OH)₂) and aluminum hydroxide (Al(OH)₃). According to the above-implemented configuration, when magnesium hydroxide or aluminum hydroxide is combusted by a flame, water (H₂O) is generated to extinguish the flame.

Therefore, according to the above-implemented configuration of the present disclosure, a flame generated when a thermal event occurs in a specific battery cell 100 may be initially extinguished so that other battery cells 100 are not subject to thermal damage. In particular, according to this aspect of the present disclosure, the propagation of thermal runaway of the battery module 10 may be effectively prevented or delayed, thereby ensuring the safety and reliability of the battery module 10.

A battery pack according to an embodiment of the present disclosure may include one or more battery modules 10 according to an embodiment of the present disclosure described above. The battery pack according to the present disclosure may further include components of a battery pack known at the time of filing the present disclosure, such as a BMS (Battery Management System) for integrated control of charging and discharging of one or more battery modules, a current sensor, and a fuse.

In addition, in the battery pack according to the present disclosure, the module case 300 described above may serve as a pack case. In this case, components of the battery pack such as a BMS, a bus-bar, or a relay may be included inside the module case 300. In this case, it is also called a cell-to-pack type in that the battery cell 100 is directly stored in the pack case.

A vehicle according to an embodiment of the present disclosure may include one or more battery packs according to an embodiment of the present disclosure or battery modules according to an embodiment of the present disclosure. The vehicle according to the present disclosure may be, for example, an electric vehicle, a hybrid vehicle, or a plug-in hybrid vehicle. The vehicle includes a four-wheel vehicle and a two-wheel vehicle. The vehicle operates by receiving power from the battery pack or battery module 10 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery module comprising:
a plurality of battery cells; and
a compression member disposed between the plurality of battery cells, filled with a fluid so that the fluid moves therein, and configured to be partially deformed in shape by external pressure.

2. The battery module according to claim 1,
wherein the compression member comprises a protruding portion in which at least a portion protrudes outward to form a path through which the fluid moves.

3. The battery module according to claim 2,
wherein the protruding portion is configured to be in contact with the battery cells provided on both sides of the compression member.

4. The battery module according to claim 2,
wherein the protruding portion is formed on an edge of the compression member.

5. The battery module according to claim 2,
wherein the protruding portion comprises a first protruding portion provided on a longitudinal end side of the compression member.

6. The battery module according to claim 5,
wherein the first protruding portion is configured to extend in a height direction of the compression member.

7. The battery module according to claim 6,
wherein the protruding portion further comprises a second protruding portion configured to extend orthogonally to the first protruding portion.

8. The battery module according to claim 7,
wherein a width of the first protruding portion is configured to be greater than a width of the second protruding portion.

9. The battery module according to claim 6,
wherein the protruding portion further comprises a third protruding portion provided at a center of the compression member.

10. The battery module according to claim 1,
wherein the fluid comprises a fluid having non-Newtonian characteristics.

11. The battery module according to claim 1,
wherein the fluid is configured as a colloidal solution.

12. The battery module according to claim 1,
wherein the compression member is configured so that the fluid therein flows out of the compression member by heat or pressure.

13. The battery module according to claim 1,
wherein the fluid is configured to include at least one of magnesium hydroxide and aluminum hydroxide.

14. A battery pack comprising a battery module according to any one of claims 1 to 13.

15. A vehicle comprising a battery module according to any one of claims 1 to 13.
